# EUROPÄISCHE PATENTSCHRIFT

(11) **EP 2 404 225 B1**
(45) Veröffentlichungstag und Bekanntmachung des Hinweises auf die Patenterteilung: **11.02.2015**
(21) Anmeldenummer: 09796969.5
(22) Anmeldetag: 18.12.2009
(51) Int. Cl.: G05B 19/042, G05B 19/418, G06F 9/44, G06F 9/445

(54) **VERFAHREN UND VORRICHTUNG ZUR AUTOMATISCHEN EINBINDUNG VON SENSORVORRICHTUNGEN IN EINE ZENTRALE STEUERUNG**
METHOD AND DEVICE FOR AUTOMATICALLY INTEGRATING SENSOR DEVICES IN A CENTRAL CONTROLLER
PROCÉDÉ ET DISPOSITIF POUR INTÉGRER AUTOMATIQUEMENT DES DISPOSITIFS DE DÉTECTION DANS UNE COMMANDE CENTRALE

(30) Priorität: 02.03.2009 DE 102009012832
(43) Veröffentlichungstag der Anmeldung: 11.01.2012
(73) Patentinhaber: KHS AG, 44143 Dortmund (DE)
(72) Erfinder: HERRMANN, Marius Michael, 57520 Rosenheim (DE); ZHANG, Xiang, 44229 Dortmund (DE); EWERING, Dag, 44137 Dortmund (DE); NENDZA, Thomas, 44137 Dortmund (DE); WEBER, Matthias, 44143 Dortmund (DE)
(86) Internationale Anmeldenummer: PCT/EP2009/009113
(87) Internationale Veröffentlichungsnummer: WO 2010/099811

(56) Entgegenhaltungen:
- EP-A2- 1 422 629
- EP-A2- 1 594 023
- DE-A1- 10 109 197
- US-A1- 2001 056 306

## Beschreibung

### Technisches Gebiet

Die vorliegende Erfindung betrifft ein Verfahren und eine Vorrichtung zur automatischen Einbindung von Sensorvorrichtungen in eine zentrale Steuerung, insbesondere zur automatischen modularen Einbindung von Sensorvorrichtungen in eine zentrale Steuerung eines Netzwerks sowie ein Computerprogramm mit Programmcodemitteln, um alle Schritte des Verfahrens auszuführen.

### Beschreibung des Standes der Technik

Zentrale Steuerungen von Netzwerken im Sinne der Beschreibung betreffen grundsätzlich alle industriellen Systeme in allen denkbaren Bereichen des Maschinen- und Anlagenbaus. Insbesondere umfassen sie Steuerungen von Netzwerken in Herstellungs- und Fertigungsanlagen sowie in Anlagen des Sondermaschinenbaus, wie etwa Verpackungs- oder Abfüllanlagen, insbesondere zum Abfüllen von Getränken in Flaschen.

Im Folgenden wird beispielhaft lediglich auf Überwachungssysteme von Abfüllanlagen als industrielle Systeme eingegangen, wobei die Überwachungssysteme insbesondere jegliche Art von Sensorvorrichtungen zur Überwachung von Zuständen und Abläufen in dem zu überwachenden System umfassen. Darüberhinaus ist das vorliegende Verfahren bzw. die vorliegende Vorrichtung selbstverständlich auch für alle anderen Arten von Steuerungen und deren Komponenten in den genannten industriellen Systemen anwendbar.

Industrielle Systeme, insbesondere Abfüllanlagen, sind im Allgemeinen in sogenannten Produktionslinien gruppiert, wobei jede Produktionslinie ein besonderes Endprodukt herstellt. Dies kann bspw. eine mit einem bestimmten Getränk befüllte und mit einem speziellen Etikett beklebte Flasche sein.

Darüberhinaus können innerhalb eines industriellen Systems mehrere derartige Produktionslinien vorgesehen sein, die parallel zueinander betrieben werden.

Jede Produktionslinie umfasst in der Regel mehrere Stationen, wobei auf jeder Station ein bestimmter Arbeitsschritt bzw. mehrere Arbeitsschritte auf dem Weg zur Herstellung des Endprodukts ausgeführt werden. Bei diesen Schritten kann es sich bspw. um das Anordnen, Waschen, Transportieren, Befüllen, Verschließen oder Etikettieren von Flaschen handeln.

Jede Station weist in der Regel mehrere Komponenten auf, die miteinander zusammenwirken, um den jeweiligen Arbeitsschritt der Maschine auszuführen. Insbesondere werden die Komponenten jeder Station von einer lokalen Recheneinheit, wie bspw. einem Server, gesteuert und überwacht. Speziell für eine Überwachung der korrekten Durchführung der Schritte der Stationen sind als Komponenten u.a. die beschriebenen Sensorvorrichtungen vorgesehen, die bspw. als Kameras, Bewegungssensoren, Lichtschranken oder andere Ein-/Ausgabegeräte ausgeführt sein können und bspw. Füllstände der Flaschen, eine korrekte Positionierung von Etiketten oder den korrekten Verschluss der Flaschen überwachen. Die lokalen Recheneinheiten einer gesamten Produktionslinie werden im Allgemeinen von einer zentralen Recheneinheit gesteuert und überwacht. Selbstverständlich können auch mehrere Produktionslinien einer zentralen Recheneinheit zugeordnet werden.

Gemäß dem Stand der Technik sind die lokalen Recheneinheiten bzw. Server der einzelnen Stationen individuell an die an der jeweiligen Station durchgeführten Arbeits- und Überwachungsschritte angepasst und konfiguriert. Dies hat zur Folge, dass bei Änderungen an den Komponenten der Station, wie bspw. den voranstehend erwähnten Sensorvorrichtungen, oder bei Änderungen an deren Ansteuerung eine individuelle Anpassung in der Software des lokalen Servers bzw. einer zugehörigen Steuerung erfolgen muss. Sollen bspw. Parameter angepasst, Abläufe neu programmiert oder eine neue zusätzliche Sensorvorrichtung zur Erfüllung neuer Aufgaben in die Station integriert werden, so muss eine individuelle Änderung an der Steuerung bzw. an dem jeweiligen Server jeder betroffenen Station individuell durchgeführt werden. Sind die Änderungen an mehreren Stationen vorzunehmen, so muss jeder der zugehörigen lokalen Server individuell angepasst werden.

Soll eine nicht mehr zum Einsatz kommende Komponente entfernt werden, so müsste diese Komponente ebenfalls manuell aufwendig aus der Steuerung ausgeliedert werden. Daher verbleibt diese ungenutzte Komponente in der Regel in der Steuerung und wird weiterhin betrieben. Dies bedeutet, dass z.B. eine Kamera oder eine Lichtschranke weiterhin getriggert wird und lediglich ihre Ausgabe ignoriert wird. Auch verbleibt die Komponente in der Regel innerhalb einer zu der Steuerung gehörigen Bedienoberfläche und wird dort angezeigt, so dass die Bedienoberfläche aufgrund von nicht verwendeten Komponenten zunehmend unübersichtlich werden kann.

In beiden Fällen Ist eine flexible Anpassung zur Ein- und Ausgliederung von Komponenten, insbesondere von Sensorvorrichtungen, in die Steuerung nicht möglich. Auch ist die individuelle Anpassung der einzelnen lokalen Stationen bzw. deren Server stets mit einem hohen Zeitaufwand verbunden. Insbesondere ist somit eine kurzfristige und vorübergehende flexible Anpassung und Einbindung von ausgewählten Komponenten in eine Steuerung, wie dies bspw. bei einem kurzfristigen Wechsel des auf der Produktionslinie zu produzierenden Produkts erforderlich sein könnte, nicht möglich. Es besteht daher ein Bedarf, ein Verfahren zur flexiblen Einbindung von Komponenten in eine Steuerung bereitzustellen und insbesondere eine automatische Einbindung dieser Komponenten in eine zentrale Steuerung eines entsprechenden industriellen Systems zu ermöglichen.

Die Druckschrift DE 101 09 197 A1 beschreibt ein Verfahren zur Installation einer Anwendung in einer zur Überwachung und Steuerung einer Vorrichtung verwendeten Steuerung oder Regelung sowie eine Steuerung oder Regelung und einen Computer bei denen ein derartiges Verfahren verwendet wird. Bei diesem Verfahren werden alle angeschlossenen Sensorvorrichtungen bzw. Steuervorrichtungen detektiert; außerdem wird festgestellt, ob Steuervorrichtungen gefunden wurden oder nicht. Wenn eine Steuervorrichtung gefunden wurde, wird festgestellt, ob eine Steuervorrichtung dieses Namens in einer Vorrichtungsaufzelchnungselnhelt aufgezeichnet ist. Wenn keine Steuervorrichtung mit dem gleichen Namen aufgezeichnet ist, wird der Name der Steuervorrichtung neu aufgezeichnet.

Die Druckschrift US 2001/0056306 A1 beschreibt ein System zum Entwickeln von Anwendungssystemen und deren Implementierung für eine automatisierte Maschine, das eine Belastung des Benutzers beim Installieren der Peripheriegeräte mit einer Steuerung verringern kann. Das System weist eine Steuerung auf, einen mit der Steuerung verbundenen Monitor und zumindest ein zu steuerndes Objekt. Das Objekt ist mit der Steuerung verbunden. Das System weist weiterhin eine Entwicklungsvorrichtung zum Entwickeln eines Programms für das gesteuerte Objekt, eine Implementierungsvorrichtung zum Implementieren des von der Entwicklungsvorrichtung entwickelten Programms, sowie ein Softwaremodul, das eindeutig dem Objekt zugeordnet ist, auf. Das Softwaremodul liegt in Form von Software vor, die zumindest eine der folgenden Prozeduren zur Verfügung stellt: eine Symbolprozedur zur Anzeige eines Symbole für das Objekt in einem Anzeigebereich auf dem Monitor, eine Beschreibungsprozedur zur Beschreibung eines Steuerprozesses für das Objekt, und eine Implementierungsprozedur zum Implementieren des für das Objekt entwickelten Steuerprozesses.

Die Druckschrift EP 1 594 023 A2 beschreibt ein Verfahren zur automatischen Konfiguration eines Prozesssteuerungssystems, wobei das Prozesssteuerungssystem einen Master und zumindest einen bspw. als Sensor ausgebildeten Slave umfasst. Dabei steuert der Master den zumindest einen Slave, der mit dem Master verbunden ist, wobei zwischen dem Master und dem Slave über ein Bussystem kommuniziert wird. Weiterhin ist vorgesehen, dass der Master den zumindest einen Slave über das Bussystem automatisch identifiziert, und danach automatisch eine Vorrichtungskonfiguration zum Einrichten des Slaves gemäß seiner Identifizierung derart generiert, dass der Slave bereit ist, in dem Prozesssteuerungssystem betrieben zu werden.

Die Druckschrift EP 1 422 629 A2 beschreibt ein Verfahren zur automatischen Konfiguration einer Parametrieroberfläche für mindestens eine Regelung und/oder mindestens eine Steuerung von Werkzeugmaschinen oder Produktionsmaschinen, wobei bei der Inbetriebnahme der Maschine über ein Datennetzwerk eine Ist-Maschinentopologie bestimmt wird und diese mit hinterlegten SollMaschinentopologien verglichen wird und, falls keine Übereinstimmung mit einer der hinterlegten Soll-Maschinentopologien festgestellt wird, anhand der ermittelten ist-Maschinentopologie eine auf diese zugeschnittene Parametrieroberfläche generiert wird, bei der lediglich die Parameter und/oder Funktionen der erkannten Maschinenkomponenten zur Parametrierung der Regelung und/oder Steuerung der Maschine dem Bediener angezeigt werden.

### Zusammenfassung der Erfindung

Es wird daher ein Verfahren zur automatischen modularen Einbindung von Sensorvorrichtungen in eine zentrale Steuerung eines Netzwerks nach Anspruch 1, eine Vorrichtung nach Anspruch 11 und ein Computerprogrammprodukt nach Anspruch 13 bereitgestellt. Demnach umfasst das Verfahren zur automatischen modularen Einbindung von Sensorvorrichtungen in eine zentrale Steuerung eines Netzwerks mit mindestens einem ersten Server, der mindestens ein erstes Kommunikationsmodul und die zentrale Steuerung für mindestens einen Teil des Netzwerks umfasst, mindestens die folgenden Schritte:
a.) Ermitteln von Sensorvorrichtungen, die dem mindestens einen ersten Server tatsächlich zugeordnet sind, durch das mindestens eine erste Kommunikationsmodul,
b.) Vergleichen der ermittelten tatsächlichen Sensorvorrichtungen mit einer in einem Erkennungsauftrag definierten Anzahl von erkennbaren Sensorvorrichtungen und Bestimmen von übereinstimmenden Sensorvorrichtungen, wobei der Erkennungsauftrag eine Anweisung an ein Kommunikationsmodul ist, die eine von dem Kommunikationsmodul auszuführende Aufgabe und die hierzu notwenigen Informationen enthält, wobei mit dem Erkennungsauftrag explizit im Voraus definiert wird, welche Sensorvorrichtungen an diesem Server erkannt werden sollen,
c.) Senden von den übereinstimmenden Sensorvorrichtungen zugeordneten Daten von dem ersten Kommunikationsmodul an die zentrale Steuerung,
d.) automatisches Integrieren von vordefinierten Steuerungsmodulen in die zentrale Steuerung auf Basis der gesendeten Daten, wobei die vordefinierten Steuerungsmodule jeweils den Daten der übereinstimmenden Sensorvorrichtungen zugeordnet sind.

Wie voranstehend bereits ausgeführt wurde, erfolgt die Beschreibung rein beispielhaft für Überwachungssysteme von Produktionslinien für Abfüllanlagen. Daher werden als Komponenten der verschiedenen Stationen der Produktionsllnien Sensorvorrichtungen eingesetzt. Diese sind zur Überwachung und Steuerung der Produktionslinie, insbesondere der entsprechenden Stationen, vorgesehen. Z.B. können die Sensorvorrichtungen u.a. Kameras, Lichtschranken, Bewegungssensoren oder andere zur Erfüllung von Überwachungsaufgaben geeignete Sensoren bzw. Sensorvorrichtungen umfassen. Es wird jedoch ausdrücklich darauf hingewiesen, dass ebenso andere Komponenten, insbesondere solche zur Durchführung der Bearbeitungsschritte an der jeweiligen Station der Produktionslinie, ebenso umfasst und mit Hilfe des beschriebenen Verfahrens in eine zentrale Steuerung eingebunden werden können.

Das Netzwerk umfasst mindestens den ersten Server, wobei der mindestens eine erste Server des Netzwerks von der zentralen Steuerung Steuerungsbefehle zur Steuerung von Sensorvorrichtungen erhalten kann, die mit dem ersten Server verbunden sind bzw. diesem zugeordnet sind. Die zentrale Steuerung selbst umfasst eine Bedienoberfläche zum Austausch von Informationen mit einem Benutzer. Insbesondere können über die Benutzeroberfläche Parameter und Messwerte ausgegeben werden. Ebenso können von einem Benutzer Informationen und Vorgabewerte, insbesondere für Parameter, zur Steuerung des mindestens einen Servers und der zugehörigen Sensorvorrichtung eingegeben werden. Die zentrale Steuerung ist derart konfiguriert, dass diese mit dem beschriebenen Verfahren modular erweiterbar ist, so dass die zentrale Steuerung automatisch an die dem Server zugeordneten Sensorvorrichtungen angepasst werden kann, wobei diese Anpassung automatisch erfolgt, ohne den Server oder die zentrale Steuerung im Rahmen der Anpassung manuell neu programmieren zu müssen. Hierzu wird, wie voranstehend beschrieben, der mindestens eine erste Server von dem ersten Kommunikationsmodul auf zugeordnete Sensorvorrichtungen überprüft bzw. gescannt. Es werden hierbei Informationen über die tatsächlich an dem Server angeschlossenen Sensorvorrichtungen von dem ersten Kommunikationsmodul gesammelt. Anschließend wird ein Vergleich zwischen den soeben in dem Scan-Vorgang ermittelten Sensorvorrichtungen und einem Erkennungsauftrag durchgeführt, in dem eine Anzahl von erwünschten Sensorvorrichtungen definiert ist.

Als erwünschte Sensorvorrichtungen sind jene Sensorvorrichtungen zu verstehen, die in die zentrale Steuerung eingebunden werden sollen. Hierzu werden in dem Erkennungsauftrag Informationen zu diesen erwünschten Sensorvorrichtungen hinterlegt. Als Erkennungsauftrag kann im Allgemeinen eine Anweisung an ein Kommunikationsmodul verstanden werden, die eine von dem Kommunikationsmodul auszuführende Aufgabe und die hierzu notwenigen Informationen enthält. Beispielsweise kann der Erkennungsauftrag eine Anweisung zur Durchführung des Scanvorgangs sowie eine Anweisung zum Vergleich eines Ergebnisses des Scan-Vorgangs mit ebenfalls in dem Erkennungsauftrag hinterlegten Informationen über die voranstehend beschriebenen erwünschten Sensorvorrichtungen umfassen.

Auf diese Weise kann mittels des Erkennungsauftrags explizit im Voraus definiert werden, welche Sensorvorrichtungen an diesem Server erkannt werden sollen. Sind dem Server Sensorvorrichtungen zugeordnet, die nicht in dem Erkennungsauftrag definiert sind, so werden diese Sensorvorrichtungen nicht weiter berücksichtigt. Dagegen werden alle übereinstimmenden Sensorvorrichtungen an dem Server bei dem durchgeführten Vergleich bestimmt und die Informationen zu den übereinstimmenden Sensorvorrichtungen in Form von Daten bereitgestellt. Diese Daten sind mindestens derart ausgeführt, dass sie für eine Identifikation der Sensorvorrichtungen verwendet werden können und diesen somit zugeordnet sind. Diese zugeordneten Daten liefern somit eine Übersicht über alle übereinstimmenden Sensorvorrichtungen an dem entsprechenden Server und können hierzu bspw. eine Auflistung umfassen.

Die zugeordneten Daten werden von dem Kommunikationsmodul anschließend an die zentrale Steuerung weitergegeben bzw. an diese gesendet. Diese kann anhand dieser Daten entsprechend vordefinierte Steuerungsmodule in die zentrale Steuerung hinzuziehen und diese in die zentrale Steuerung automatisch integrieren.

Als Steuerungsmodule im Sinne dieser Beschreibung sind bspw. Programme oder auch Programmabschnitte zu verstehen, die in ein Grundprogramm der zentralen Steuerung modular integriert oder auch entfernt werden können. Durch Integration derartiger Steuerungsmodule kann die Steuerung um in diesen Modulen definierte Funktionalitäten erweitert werden. So ermöglicht eine Integration eines einer Sensorvorrichtung zugeordneten Steuerungsmoduls der zentralen Steuerung bspw. die jeweilige Sensorvorrichtung anzusteuern oder die entsprechenden notwenigen Parameter in der zentralen Steuerung vorzusehen. Auch müssen zur Überwachung dieser Sensorvorrichtung relevante Parameter in die Bedienoberfläche der zentralen Steuerung integriert werden. Auch diese Funktion kann bspw. in dem entsprechenden Steuerungsmodul definiert sein.

Die vordefinierten Steuerungsmodule können bspw. in einer Bibliothek hinterlegt sein und von dort abgerufen werden. Dies bedeutet, dass anhand der Daten über die tatsächlich an dem ersten Server angeschlossenen Sensorvorrichtungen die zentrale Steuerung flexibel und modular an die momentane Konfiguration des Netzwerks angepasst werden kann. Insbesondere werden nur jene vordefinierten Steuerungsmodule in die zentrale Steuerung integriert, für die eine tatsächliche Sensorvorrichtung vorhanden ist und die gleichzeitig in dem Erkennungsauftrag definiert wurde. Nicht definierte Sensorvorrichtungen bleiben zwar an dem ersten Server angeschlossen, werden aber in der zentralen Steuerung nicht berücksichtigt. Dies bietet die Möglichkeit, die zentrale Steuerung klein und übersichtlich zu halten und insbesondere deren Bedienoberfläche bezüglich dieser Aspekte zu optimieren.

Erfindungsgemäß umfasst das Verfahren außerdem den folgenden Schritt zur Ansteuerung der angebundenen Sensorvorrichtungen:
e.) Automatisches Integrieren mindestens eines definierten Erkennungsmoduls in dem Server, wobei das integrierte definierte Erkennungsmodul zum gegenseitigen Datenaustausch kommunikationstechnisch mit dem ersten Kommunikationsmodul und mit mindestens einer dem Server zugeordneten Sensorvorrichtung verbunden ist.

Unter einem Erkennungsmodul im Sinne der vorliegenden Beschreibung wird allgemein eine Schnittstelle zwischen einem Kommunikationsmodul und der mit dem zugehörigen Server verbundenen Sensorvorrichtung verstanden. In diesem Erkennungsmodul können bspw. Aufgaben der Sensorvorrichtung definiert und das Erkennungsmodul als ein Steuerprogramm für eine Ansteuerung der jeweiligen Sensorvorrichtung konfiguriert sein. Darüber hinaus können neben dem Steuerprogramm auch Parameter definiert sein. Beispielsweise kann das Erkennungsmodul demnach sowohl für die Steuerung einer Kamera zuständig sein, als auch Parameter zu deren Triggerung umfassen. Wie nachfolgend noch näher erläutert wird, kann das Erkennungsmodul außerdem für die Weiterleitung oder auch für eine Verarbeitung der von der jeweiligen Sensorvorrichtung bereitgestellten Signale konfiguriert sein. Dies bedeutet, dass das Erkennungsmodul im Falle einer angeschlossenen Kamera entweder deren Bilder lediglich weiterleitet oder auch ggf. anpassen und/oder auswerten kann. Wird bspw. mittels der Kamera überwacht, ob ein Etikett an einer Flasche korrekt positioniert bzw. ausgerichtet ist, so kann in dem entsprechenden Erkennungsmodul ein Algorithmus zur Auswertung des erstellten Bildes integriert sein, mit dessen Hilfe die Position des Etiketts bestimmt wird. Dies bedeutet, dass das Erkennungsmodul dazu konfiguriert sein kann, eine Verarbeitung des Bildes und eine anschließende Auswertung selbständig durchzuführen. Das Erkennungsmodul erhält in dem hier beschriebenen Fall also von der Kamera ein Bild und liefert nach einer Verarbeitung bzw. Auswertung lediglich das erwünschte Ergebnis, ob das Etikett korrekt positioniert ist. Die Ausgabe des Ergebnisses erfolgt anschließend an das Kommunikationsmodul. Umgekehrt kann das Erkennungsmodul aber auch Daten bzw. Informationen von dem Kommunikationsmodul erhalten und verarbeiten und/oder an die Sensorvorrichtung weiterleiten.

Neben der voranstehenden Erkennung und Integration von Sensorvorrichtungen in das Netzwerk, kann mit diesem Schritt des Integrierens eines Erkennungsmoduls somit ein Modul zum Datenaustausch zwischen mindestens einer entsprechenden Sensorvorrichtung und dem zugehörigen Kommunikationsmodul ermöglicht werden.

In der Regel handelt es sich bei den eingesetzten Sensorvorrichtungen nicht um individuell ausgestaltete Einzelstücke sondern um mehrfach eingesetzte Vorrichtungen. Dies bietet die Möglichkeit das Erkennungsmodul gezielt auf den jeweiligen Typ der mindestens einen Sensorvorrichtung anzupassen, so dass bei einer weiteren Verwendung einer baugleichen zweiten Sensorvorrichtung das Erkennungsmodul übernommen werden kann.

Dies bedeutet, dass das Erkennungsmodul in universeller Art und Weise an die mindestens eine entsprechende Sensorvorrichtung bzw. deren Typ angepasst sein muss und eine definierte Schnittstelle zur Kommunikation mit dem Kommunikationsmodul bereitstellt. Folglich muss lediglich ein vordefiniertes Erkennungsmodul für jeden unterschiedlichen Typ von Sensorvorrichtungen bereitgestellt werden. Dies kann bereits im Vorfeld erfolgen, so dass eine bestimmte Sensorvorrichtung nicht lokal an dem jeweiligen Server manuell integriert bzw. installiert werden muss.

Die vordefinierten Erkennungsmodule für jeden Typ von Sensorvorrichtungen können bspw. in einer Bibliothek bereitgestellt und bei Bedarf aus dieser abgerufen werden. Eine manuelle spezifische Konfiguration des jeweiligen Servers kann somit entfallen und wird durch die automatische Integration des jeweiligen Erkennungsmoduls ersetzt. Dies bedeutet, dass auch das Kommunikationsmodul universell ausgeführt sein kann, da es nicht auf die unterschiedlichen Sensorvorrichtungen angepasst werden muss. Im Unterschied zu den Erkennungsmodulen sind die jeweiligen Kommunikationsmodule der jeweiligen Server bereits auf diesen vorinstalliert und werden in der Regel im Rahmen der Einbindung von Sensorvorrichtungen nicht mehr abgeändert. Eine Anpassung des Netzwerks bzw. der zugrundeliegenden Vorrichtung erfolgt daher ausschließlich über die Erkennungsmodule. Sollen neue Sensorvorrichtungen integriert oder bereits integrierte Sensorvorrichtungen in die zentrale Steuerung eingebunden werden, so muss hierzu lediglich das entsprechende Erkennungsmodul integriert und ggf. ein bereits vorhandenes Erkennungsmodul ersetzt werden.

Diese Vereinfachung wird durch eine Trennung zwischen dem Kommunikationsmodul und dem Erkennungsmodul erreicht. Eine einheitliche Schnittstelle zwischen beiden Modulen kann darüber hinaus ebenfalls zur einheitlichen Behandlung und einfachen modularen Austauschbarkeit der Erkennungsmodule vorgesehen sein. Wie nachfolgend noch näher dargestellt wird, kann das vordefinierte Erkennungsmodul selbstverständlich auch aus vordefinierten Teilmodulen nach einem Baukastenprinzip flexibel erstellt werden. In diesem Fall ist das Erkennungsmodul selbst nicht vordefiniert und hinterlegt. Es werden in diesem Fall lediglich die einzelnen Teilmodule vordefiniert sowie hinterlegt und können je nach Bedarf individuell zu dem gewünschten Erkennungsmodul zusammengesetzt werden.

Entsprechend einer weiteren Ausführungsform umfasst das Netzwerk des weiteren eine Anzahl von zweiten Servern. Hierbei ist jedem der zweiten Server aus der Anzahl von zweiten Servern je ein zweites Kommunikationsmodul zugeordnet, das mit dem ersten Kommunikationsmodul des ersten Servers kommunikationstechnisch verbunden ist, wobei die Schritte a.) und b.) an Stelle des mindestens einen ersten Servers von und in Bezug auf mindestens einen zweiten Server von der Anzahl von zweiten Servern ausgeführt werden und das Verfahren ferner die weiteren folgenden Schritte umfasst:
a'.) Senden eines definierten Erkennungsauftrags von dem ersten Kommunikationsmodul an das zweite Kommunikationsmodul des mindestens einen zweiten Servers, wobei in dem definierten Erkennungsauftrag eine Anzahl von erkennbaren Sensorvorrichtungen definiert ist,
c'.) Senden von den übereinstimmenden Sensorvorrichtungen zugeordneten Daten von dem zweiten Kommunikationsmodul des mindestens einen zweiten Servers an das erste Kommunikationsmodul, wobei Schritt a'.) vor Schritt a.) und Schritt c'.) vor Schritt c.) ausgeführt wird.

Gemäß dieser beschriebenen Ausführungsform werden neben dem voranstehenden ersten Server weitere sog. zweite Server vorgesehen. Jedoch ist die zentrale Steuerung weiterhin dem ersten Server zugeordnet, so dass diesem eine übergeordnete "Master"-Funktion innerhalb des Netzwerks zukommt, wohingegen die zweiten Server jeweils auch als "Slave" bezeichnet werden können. Bei Produktionslinien können hierbei insbesondere die Server der einzelnen Stationen die Slaves bzw. die zweiten Server darstellen und ein Steuerrechner als erster Server bzw. Master ausgeführt sein. Die jeweilige kommunikationstechnische Verbindung der zweiten Server mit dem ersten Server erlaubt ein Senden des bereits erläuterten Erkennungsauftrags von dem ersten Server an einen oder mehrere der zweiten Server. Auf diese Weise kann der Erkennungsauftrag zentral in dem ersten Server eingegeben und an die jeweiligen zweiten Server verteilt werden. Auf den zweiten Servern kann dieser Erkennungsauftrag analog der voranstehenden Darstellung zu den Verfahrensschritten bezüglich des ersten Servers abgearbeitet werden. Dies bedeutet, dass ebenfalls ein Scannen des jeweiligen zweiten Servers nach dem jeweils zweiten Server zugeordneten Sensorvorrichtungen durch das jeweilige zweite Kommunikationsmodul sowie ein Vergleichen der ermittelten tatsächlichen Sensorvorrichtungen mit den in dem Erkennungsauftrag definierten Sensorvorrichtungen, erfolgt. Daten, die aus diesem Vergleich resultieren und den übereinstimmenden Sensorvorrichtungen zugeordnet sind, werden demnach von dem zweiten Kommunikationsmodul mindestens eines der zweiten Server an das erste Kommunikationsmodul des ersten Servers gesendet. Von dort werden sie, wie ebenfalls bereits voranstehend bezüglich des ersten Servers beschrieben, an die zentrale Steuerung weitergegeben, so dass dort eine Integration der entsprechenden vordefinierten Steuerungsmodule in die zentrale Steuerung erfolgen kann. Gemäß dieser Ausführungsform ist es möglich, mehrere Erkennungsaufträge gleichzeitig an mehrere zweite Server zu senden. Hierbei kann ein einheitlicher Erkennungsauftrag für alle Server oder jeweils ein individuell angepasster Erkennungsauftrag für jeden einzelnen zweiten Server versendet werden. Anhand der von den zweiten Servern zurückgesendeten Daten, wird dem ersten Server ein Überblick über die an den jeweiligen zweiten Servern angeordneten Sensorvorrichtungen gegeben.

Außerdem kann das Verfahren folgende Schritte zur Ansteuerung der eingebauten Sensorvorrichtungen umfassen:
f.) Senden mindestens eines definierten Erkennungsmoduls von dem ersten Kommunikationsmodul an das zweite Kommunikationsmodul des mindestens einen zweiten Servers und
g.) Automatisches Integrieren des mindestens einen definierten Erkennungsmoduls in dem mindestens einen zweiten Server, wobei das integrierte definierte Erkennungsmodul zum gegenseitigen Datenaustausch kommunikationstechnisch mit dem zweiten Kommunikationsmodul und mit mindestens einer der dem mindestens einen zweiten Server zugeordneten Sensorvorrichtungen verbunden ist.

Somit kann auch ein Erkennungsmodul über die jeweiligen Kommunikationsmodule von dem ersten Server auf mindestens einen zweiten Server gesendet werden. Dort wird das Erkennungsmodul ebenfalls, analog zu der bisherigen Darstellung bezüglich des ersten Servers, integriert und stellt somit die Kommunikation zwischen dem zweiten Kommunikationsmodul und der Sensorvorrichtung her. Dies bietet die Möglichkeit, neben den Erkennungsaufträgen auch die Erkennungsmodule zentral auf dem ersten Server bereitzustellen und über das Netzwerk auf die zweiten Server zu verteilen, ohne manuell an dem jeweiligen zweiten Server tätig werden zu müssen.

Ferner kann das Verfahren außerdem ein Weiterleiten von zwischen der mindestens einen Sensorvorrichtung und dem Kommunikationsmodul ausgetauschten Daten durch das Erkennungsmodul umfassen.

Des weiteren kann das Verfahren außerdem ein Verarbeiten der Daten durch das Erkennungsmodul umfassen.

Die beschriebene Kommunikation mittels des jeweiligen Erkennungsmoduls zwischen dem jeweiligen ersten bzw. zweiten Kommunikationsmodul und der zugeordneten Sensorvorrichtung auf dem ersten Server bzw. auf einem der zweiten Server kann, wie bereits voranstehend ausführlich erläutert, demnach lediglich ein reines Weiterleiten von Daten umfassen, wobei die Daten selbst unverändert bleiben. Alternativ kann, wie ebenfalls voranstehend beschrieben, neben einer reinen Weiterleitung auch eine Verarbeitung der Daten durch das jeweilige Erkennungsmodul erfolgen, wobei bspw. eine Änderung des Datenformats der Daten oder bereits eine Auswertung der von der Sensorvorrichtung übermittelten Daten durchgeführt wird.

Entsprechend einer anderen Ausführungsform ist das Erkennungsmodul automatisch anpassbar. Auch kann das Erkennungsmodul auf Basis der zugeordneten Daten angepasst werden.

Wie bereits voranstehend kurz dargelegt, kann die Möglichkeit der Anpassung des Erkennungsmoduls bspw. für einen Fall vorgesehen sein, in dem mehrere Sensorvorrichtungen mit einem einzigen Erkennungsmodul gekoppelt werden sollen. Auch hierfür kann eine modulare Anpassung vorgesehen sein, so dass das Erkennungsmodul aus universell vorbereiteten und vorkonfigurierten Modulen nach einem Baukastenprinzip zusammengesetzt wird. Dies bedeutet, dass aus universellen Teilmodulen, die für den jeweiligen Typ der Sensorvorrichtung vorbereitet sind, ein individuell angepasstes Erkennungsmodul bereitgestellt werden kann. Als Kriterium für eine Auswahl der vordefinierten Teilmodule können bspw. die Daten zu den übereinstimmenden Sensorvorrichtungen herangezogen werden. Diese geben Auskunft darüber, welche Sensorvorrichtungen an welchem Server angeordnet bzw. diesem zugeordnet sind. Entsprechend wird das für diesen Server zu erstellende Erkennungsmodul durch Auswahl der entsprechenden universellen Teilmodule angepasst, die für die dortigen Sensorvorrichtungen vorkonfiguriert sind.

Sollen also an ein Erkennungsmodul zwei Typen von Sensorvorrichtungen, wie bspw. eine Kamera und eine Lichtschranke, angeschlossen werden, so muss das Erkennungsmodul dazu konfiguriert sein, mit beiden Elementen kommunizieren zu können. Dies bedeutet, dass sowohl ein für die Kamera vordefiniertes Teilmodul als auch ein für die Lichtschranke vordefiniertes Teilmodul modular miteinander zu dem gewünschten Erkennungsmodul kombiniert werden. Neben den beiden jeweils typspezifischen Teilmodulen kann darüber hinaus auch noch ein Grundmodul integriert sein, das universelle Funktionalitäten des Erkennungsmoduls bereitstellt, die nicht von den Typen der angeschlossenen Sensorvorrichtungen abhängig ist. Dieses Grundmodul kann bspw. eine Schnittstelle zu den Kommunikationsmodulen der Server definieren, die in jedem Erkennungsmodul vorgesehen werden kann. Hervorzuheben ist hierbei nochmals, dass die universellen Teilmodule bereits vordefiniert bspw. in einer Bibliothek hinterlegt werden können. Eine Integration zu einem Erkennungsmodul kann daher entsprechend vordefinierter Vorgaben und Hinzuziehung der voranstehend genannten Daten vollautomatisch erfolgen.

Die Teilmodule zur Erstellung des Erkennungsmoduls können Teilaufgaben des Erkennungsmoduls definieren. Dies bedeutet, dass die Teilmodule bspw. Algorithmen für eine Objekterkennung oder Farberkennung umfassen. Sollen neue bzw. andersartige Objekte erkennbar sein, so wird das entsprechende Teilmodul gegen ein Teilmodul mit einem entsprechend angepassten Algorithmus ausgetauscht und hierauf basierend ein neues Erkennungsmodul erstellt. Dieses kann anschließend gemäß der Beschreibung in den jeweiligen Server integriert werden und dort ein bisheriges Erkennungsmodul ersetzen. Dies bietet den Vorteil, dass nicht das gesamte Erkennungsmodul umgestaltet werden muss, sondern lediglich neue Teilmodule erstellt und integriert werden. Somit ist es außerdem möglich, die Erkennungsmodule schnell und flexibel auf neue Anforderungen anzupassen, ohne bereits eine große Vielzahl von Teilmodulen zu integrieren, die alle eventuellen Erweiterungen und Funktionen bereits berücksichtigen müssen. Es sind also lediglich jene Teilmodule integriert, die auch tatsächlich verwendet werden sollen. Auf diese Weise kann die Größe des Erkennungsmoduls gering gehalten und die Anforderungen an die Server gesenkt werden.

Entsprechend einer weiteren Ausführungsform kann eine mit der Steuerung kommunikationstechnisch verbundene Anlagensteuerung automatisch anpassbar sein. Auch kann die Anlagensteuerung auf Basis der zugeordneten Daten angepasst werden.

Demnach kann auch die Anlagensteuerung, wie bspw. eine SPS-Steuerung einer Produktionslinie, flexibel verändert werden, wobei auch hierzu eine modulare Anpassung vorgesehen werden kann. Dies bedeutet, dass die Anlagensteuerung aus universell vorbereiteten und vorkonfigurierten Modulen ebenfalls im Baukastenprinzip zusammengesetzt werden kann. Auf diese Weise kann bspw. eine Grundfunktionalität der Anlagensteuerung um weitere Funktionsmodule erweitert werden. Wird bspw. das Überwachungssystem der Produktionslinie bzw. deren zentrale Steuerung um eine Sensorvorrichtung zur Kontrolle einer Etikettierung von Flaschen erweitert, so muss auch eine entsprechende Auswurfvorrichtung in der Produktionslinie aktiviert, d. h. in der Anlage zur Aussortierung der fehlerhaften Flaschen integriert werden. Dementsprechend besteht auch ein Bedarf die Anlagensteuerung zur Steuerung der Auswurfvorrichtung zu erweitern. Auch hierbei können als Kriterien für die Auswahl der vordefinierten Funktionsmodule bspw. die Daten zu den übereinstimmenden Sensorvorrichtungen oder andere Daten von der zentralen Steuerung bezüglich einer Konfiguration der Anlage bereitgestellt werden, so dass die Anlagensteuerung auf diese Weise bei Bedarf flexibel und automatisch abgeändert werden kann. Dies bedeutet, dass die Erweiterung der Anlagensteuerung bspw. anhand von Daten der zentralen Steuerung erfolgen kann. In dem genannten Beispiel der Auswurfvorrichtung kann bspw. die Anlagensteuerung auf Basis dieser Daten informiert werden, dass eine Sensorvorrichtung zur Überwachung der Etiketten in die zentrale Steuerung integriert wurde und daher die Auswurfvorrichtung in die Anlagensteuerung zu integrieren ist. Somit ist es möglich, die Steuerung der Anlage je nach zu produzierenden Produkten auf dieser Produktlinie flexibel zu verändern und dennoch die Anlagensteuerung so klein wie möglich zu halten, da nur die relevanten und verwendeten Funktionsmodule gleichzeitig integriert sind. Ungenutzte Funktionsmodule brauchen nicht aufgenommen zu werden oder können entsprechend aus der Anlagensteuerung entfernt werden.

Mit Hilfe des beschriebenen Verfahrens ist es, wie voranstehend dargestellt, möglich über den zentralen ersten Server die Erkennungsmodule auf den jeweiligen zweiten Servern zu verändern, indem diese durch neue, veränderte Erkennungsmodule ersetzt werden. Auf diese Weise wird eine sog. Update-Funktionalität bereitgestellt, die eine ferngesteuerte Änderung einer jeweiligen Serverkonfiguration erlaubt, ohne dass Personal an dem jeweiligen zweiten Server tätig werden muss. Auf diese Weise ist es auch möglich, im Vorfeld nicht verwendete, aber an den Server angeschlossene, Sensorvorrichtungen durch einfachen Austausch des zugehörigen Erkennungsmoduls in die zentrale Steuerung aufzunehmen. Umgekehrt kann auf diese Weise ein nicht mehr eingesetztes Erkennungsmodul aus der zentralen Steuerung entfernt werden. Dies ist bspw. sinnvoll, wenn das zu produzierende Produkt auf der zugehörigen Produktionslinie (vorübergehend) geändert wird. Durch Austausch der Erkennungsmodule kann somit flexibel an neue Anforderungen der aktuell zu produzierenden Produkte reagiert werden und die entsprechend erwünschten Sensorvorrichtungen in die zentrale Steuerung integriert werden. Da diese Umstellung zentral und schnell durchgeführt werden kann, ist eine leichte Umstellung der Produktionslinien möglich.

Es versteht sich, dass die zweiten Server nicht nur einer einzigen Produktionslinie zugeordnet sein können. Ebenso können die zweiten Server mehrerer Produktionslinien mit einem einzigen ersten Server verbunden sein, so dass der erste Server mehrere Produktionslinien gleichzeitig ansteuert. Auf diese Weise lässt sich eine temporäre geringe Auslastung des ersten Servers einer ersten Anlage zur Steuerung anderer Anlagen nutzen und somit Kosten für zusätzliche Server, insbesondere zur relativ teuren zentralen Steuerung, einsparen.

Des weiteren wird eine Vorrichtung zur Durchführung des voranstehend beschriebenen Verfahrens bereitgestellt, wobei die Vorrichtung mindestens ein Netzwerk mit mindestens einem ersten Server umfasst, der ein erstes Kommunikationsmodul und eine zentrale Steuerung für mindestens einen Teil des Netzwerks aufweist, wobei das erste Kommunikationsmodul und die zentrale Steuerung dazu konfiguriert sind, das voranstehend beschriebene Verfahren auszuführen.

Des weiteren kann die Vorrichtung derart ausgestaltet sein, dass das Netzwerk des weiteren eine Anzahl von zweiten Servern umfasst, wobei jedem der zweiten Server aus der Anzahl von zweiten Servern je ein zweites Kommunikationsmodul zugeordnet ist, das mit dem ersten Kommunikationsmodul kommunikationstechnisch verbunden ist.

Weiterhin wird ein Computerprogramm mit Programmcodemitteln bereitgestellt, um alle Schritte des beschriebenen Verfahrens durchzuführen, wenn das Computerprogramm auf einem Computer oder einer entsprechenden Recheneinheit ausgeführt wird. Hierbei ist insbesondere ein industrielles System bzw. eine Vorrichtung gemäß der voranstehenden Beschreibung umfasst.

Das Computerprogramm kann auf einem computerlesbaren Datenträger gespeichert sein.

Die vorliegende Beschreibung deckt auch ein Computerprogrammprodukt mit Programmcodemitteln ab, die auf einem computerlesbaren Datenträger gespeichert sind und zum Durchführen aller Schritte des beschriebenen Verfahrens ausgebildet ist, wenn das Computerprogramm auf einem Computer oder einer entsprechenden Recheneinheit ausgeführt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben.

### Kurzbeschreibung der Zeichnungen

Figur 1 zeigt eine schematische Darstellung einer Vorrichtung zur Durchführung eines Verfahrens gemäß der Beschreibung.

Figur 2 zeigt eine schematische Darstellung zur flexiblen modularen Erstellung eines Erkennungsmoduls.

Figur 3 zeigt eine schematische Darstellung zur flexiblen modularen Erstellung einer Anlagensteuerung.

### Ausführliche Beschreibung

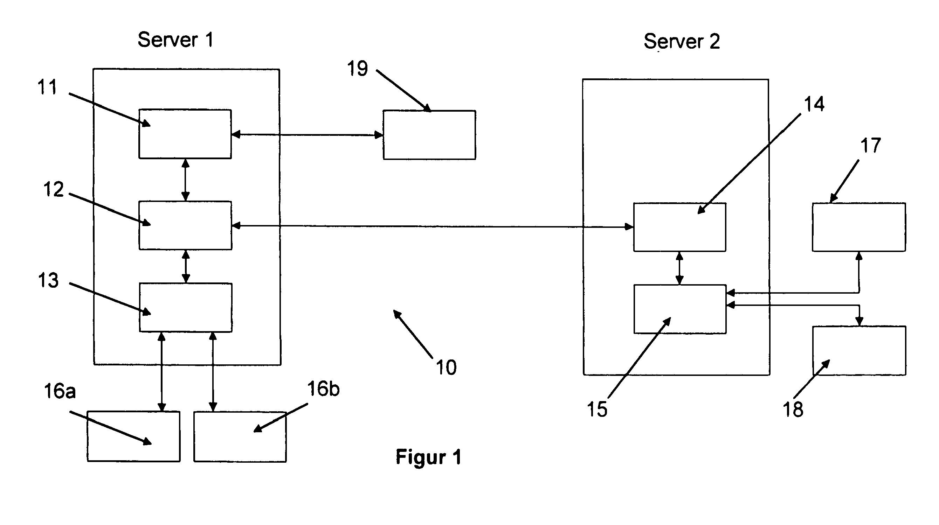

Figur 1 zeigt die schematische Darstellung einer Vorrichtung 10 zur Durchführung einer Ausführungsform eines Verfahrens gemäß der vorliegenden Beschreibung. Demnach umfasst die Vorrichtung 10 mindestens ein Netzwerk mit einem Server 1 und einem Server 2. Server 1 umfasst eine zentrale Steuerung 11, ein erstes Kommunikationsmodul 12 und ein erstes Erkennungsmodul 13. Server 2 weist ein zweites Kommunikationsmodul 14 und ein zweites Erkennungsmodul 15 auf. Die Sensorvorrichtungen 16a und 16b können mittels des nachfolgenden Verfahrens in die zentrale Steuerung 11 eingebunden werden. Hierzu ermittelt das erste Kommunikationsmodul 12 des Servers 1 die dem Server 1 zugeordneten Sensorvorrichtungen 16a und 16b. Eine Zuordnung kann bspw. als kommunikationstechnische Verbindung zwischen den Elementen ausgeführt sein. Somit erhält das erste Kommunikationsmodul 12 eine Übersicht über die an Server 1 verfügbaren Sensorvorrichtungen 16a und 16b. Diese verfügbaren Sensorvorrichtungen 16a und 16b werden mit einem Erkennungsauftrag verglichen. Dieser definiert eine Anzahl von erkennbaren Sensorvorrichtungen, die in die zentrale Steuerung eingebunden werden sollen. Dies kann bspw. in Form einer Übersicht über alle vorgesehenen Sensorvorrichtungen, z. B. nur Sensorvorrichtung 16a, bereitgestellt werden. Alternativ kann die Übersicht lediglich die Typen von Sensorvorrichtungen umfassen, die an dem jeweiligen Server, hier Server 1, erkannt werden sollen. Folglich könnte in dem Erkennungsauftrag definiert sein, dass lediglich Kameras und Lichtschranken ermittelt werden sollen. Dies bedeutet, dass an dem Server auch eine andere Sensorvorrichtung 16b angeschlossen sein kann, die nicht erkannt werden soll, wie bspw. ein Temperatursensor. Diese bleibt somit ungenutzt und wird nicht in die zentrale Steuerung 11 integriert. Folglich taucht sie dort nicht in einer Bedienoberfläche auf. Der Vergleich liefert somit in dem beschriebenen Beispiel eine Übersicht über diejenige Sensorvorrichtung 16a, die sowohl an dem jeweiligen Server angeschlossen bzw. diesem zugeordnet, als auch in dem Erkennungsauftrag definiert ist. Diese Übersicht der übereinstimmenden Sensorvorrichtung 16a enthält Daten, die der übereinstimmenden Sensorvorrichtung 16a zugeordnet sind. Diese werden in einem weiteren Schritt an die zentrale Steuerung 11 gesendet. Die zentrale Steuerung 11 kann auf Basis dieser Daten aus einer Bibliothek mit vordefinierten Steuerungsmodulen (nicht dargestellt) jene Steuerungsmodule abrufen und in die zentrale Steuerung integrieren, die den integrierten Daten zugeordnet sind. Als Steuerungsmodule können im Allgemeinen bspw. modulare Programmabschnitte bezeichnet werden. Diese sind bestimmten Sensorvorrichtungen zugeordnet und definieren bestimmte Funktionen zur Steuerung der jeweiligen Sensorvorrichtung. Die Steuerungsmodule können modular in die zentrale Steuerung integriert werden und erweitern diese um die jeweiligen Funktionen. Dies bedeutet in dem dargestellten Fall, dass die Steuerungsmodule für die zugehörige Sensorvorrichtung 16a vordefiniert und an diese angepasst sind. Auf diese Weise kann die entsprechende Sensorvorrichtung 16a in die zentrale Steuerung 11 zur Ansteuerung integriert werden.

Des weiteren kann anhand der von dem Kommunikationsmodul erstellten Übersicht über die übereinstimmende Sensorvorrichtung 16a an dem Server 1 das Erkennungsmodul 13 erstellt werden, das für die erkannte Sensorvorrichtung 16a vorkonfiguriert ist und zur Datenübertragung zwischen das Kommunikationsmodul 12 und die Sensorvorrichtung 16a gekoppelt wird. Das Erkennungsmodul 13 übernimmt hierbei die Aufgabe Daten zwischen dem Kommunikationsmodul 12 und der Sensorvorrichtung 16a weiterzuleiten. Darüber hinaus kann das Erkennungsmodul 13 aber auch zur Steuerung der Sensorvorrichtung 16a und zur Verarbeitung von Daten eingesetzt werden, die von der Sensorvorrichtung 16a bereitgestellt werden. Ist die Sensorvorrichtung 16a bspw. als Kamera zur Überwachung eines Füllstands einer Flasche konfiguriert, so liefert sie ein Bild an das Erkennungsmodul 13. Dieses wertet das Bild anhand von in dem Erkennungsmodul 13 hinterlegten Parametern und Algorithmen aus und leitet das Ergebnis an das Kommunikationsmodul 12 weiter.

Gemäß Figur 1 ist das erste Kommunikationsmodul 12 von Server 1 mit dem zweiten Kommunikationsmodul 14 von Server 2 kommunikationstechnisch verbunden. Sollen nun mit dem Server 2 gekoppelte Sensorvorrichtungen 17, 18 in die zentrale Steuerung 11 des Netzwerks eingebunden werden, so sind hierzu weitere Schritte zu den bereits voranstehend mit Bezug auf Server 1 beschriebenen Schritten notwendig. Zunächst sendet das erste Kommunikationsmodul 12 einen Erkennungsauftrag an das zweite Kommunikationsmodul 14. Dieses ermittelt analog zu dem beschriebenen Ermittlungs- und Vergleichsschritt die Server 2 zugeordneten Sensorvorrichtungen 17, 18 und vergleicht diese mit den in dem Erkennungsauftrag definierten Sensorvorrichtungen. Die aus dem Vergleich gewonnenen Daten werden dann von dem zweiten Kommunikationsmodul 14 an das erste Kommunikationsmodul 12 gesendet. Hieran schließen sich der bereits beschriebene Schritt des Sendens der Daten von dem ersten Kommunikationsmodul 12 an die zentrale Steuerung 11 sowie der Schritt der automatischen Integration der vordefinierten Steuerungsmodule in die zentrale Steuerung 11 an, die bspw. wie bereits beschrieben, in einer Bibliothek hinterlegt sein können und von dort von der zentralen Steuerung 11 abgerufen werden.

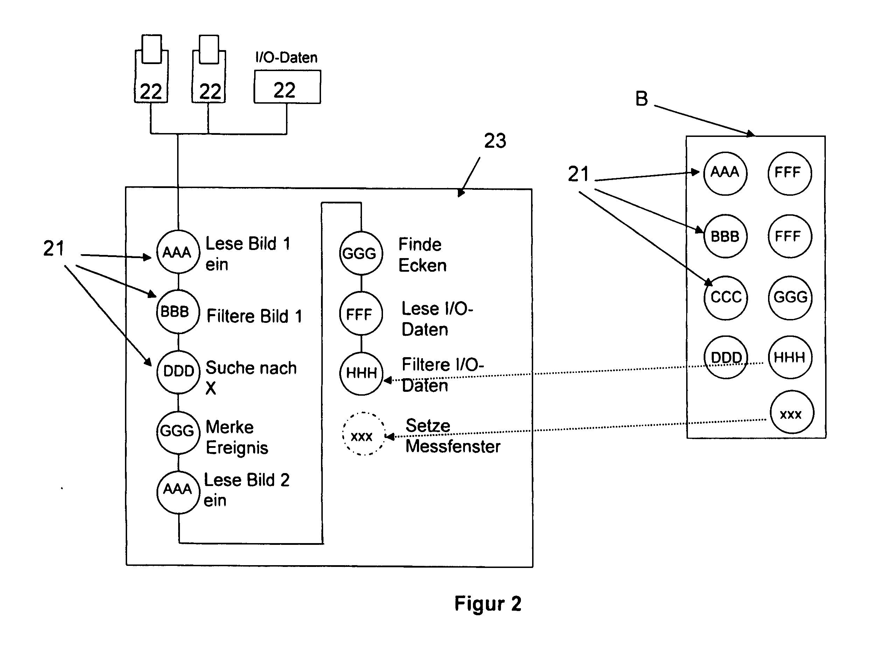

Auch die Integration eines zweiten Erkennungsmoduls 15 verläuft analog zu der bezüglich Server 1 gegebenen Darstellung und wird lediglich ergänzt durch ein anfängliches Senden des zweiten Erkennungsmoduls 15 von dem ersten Kommunikationsmodul 12 an das zweite Kommunikationsmodul 14. Anschließend erfolgt die entsprechende Integration in den Server 2. Aufgrund der Informationen über die an Server 2 angeschlossenen Sensorvorrichtungen 17, 18 kann zuvor auf Server 1 das zweite Erkennungsmodul 15 für Server 2 modular erstellt werden. Hierzu können bspw. universell vordefinierte Teilmodule, die in Alleinstellung speziell auf die Funktionsweise der einzelnen Sensorvorrichtungen angepasst sind, zu dem zweiten Erkennungsmodul 15 kombiniert werden. Eine detaillierte Darstellung zur Erstellung des Erkennungsmoduls wird in Figur 2 gegeben. Auf diese Weise kann aus universell vordefinierten Teilmodulen ein speziell auf Server 2 zugeschnittenes und angepasstes zweites Erkennungsmodul 15 erstellt werden. Selbstverständlich kann ebenso auch das erste Erkennungsmodul 13 modular aus Teilmodulen erstellt werden.

Die zentrale Steuerung 11 kann darüber hinaus kommunikationstechnisch mit einer Anlagensteuerung 19, wie bspw. einer sog. Speicherprogrammierbaren Steuerung SPS, gekoppelt sein und mit diesen Daten zur gegenseitigen Abstimmung austauschen.

Figur 2 zeigt eine schematische Darstellung zur modularen Erstellung eines möglichen Erkennungsmoduls 23. Demnach sind in einer Bibliothek B Teilmodule 21 hinterlegt. Die Teilmodule 21 umfassen Anweisungen und Parameter zur Steuerung von zugehörigen Sensorvorrichtungen 22 bzw. zur Handhabung von Daten, die von den Sensorvorrichtungen 22 bereitgestellt werden. Die Sensorvorrichtungen 22 umfassen in der dargestellten Ausführungsform lediglich beispielhaft zwei Kameras und eine nicht näher spezifizierte Ein-/Ausgabevorrichtung (I/O). Die Teilmodule 21 werden aus der Bibliothek B ausgelesen und in dem Erkennungsmodul 23 modular integriert. Dies bietet den Vorteil, dass einzelne Teilmodule 21 zur Erweiterung des Erkennungsmoduls 23 einfach hinzugefügt, aber auch entfernt oder durch andere Teilmodule 21 ersetzt werden können. Beispielsweise kann dies notwendig sein, wenn eine weitere Sensorvorrichtung 22 hinzugefügt werden soll oder eine der bereits vorhandenen Sensorvorrichtungen 22 entfernt wird. In diesem Fall können die zugehörigen Teilmodule 21 aus dem Erkennungsmodul 23 gelöscht werden und die Größe des Erkennungsmoduls 23 so gering wie möglich gehalten werden.

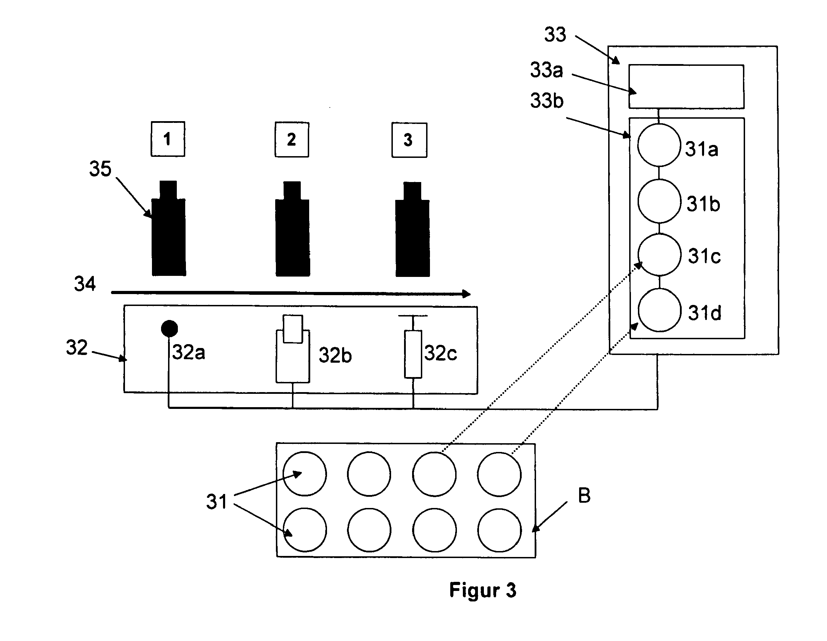

Figur 3 zeigt eine schematische Darstellung zur flexiblen modularen Erstellung einer Anlagensteuerung 33. Die Anlagensteuerung 33 umfasst demnach ein Grundprogramm 33a mit Grundfunktionen zur Steuerung einer zugehörigen Produktionslinie 34 der Anlage. Zur Abarbeitung spezieller Aufgaben kann des weiteren ein flexibler modular aufgebauter Steuerungsteil 33b vorgesehen sein. Dieser setzt sich nach einem Baukastenprinzip aus Funktionsmodulen 31 zusammen, die zur Erstellung des Steuerungsteils 33b bzw. der Anlagensteuerung 33 aus einer Bibliothek B entnommen werden, wo sie bereits vordefiniert hinterlegt sind und für den vorliegenden Anwendungsfall individuell kombiniert werden. In dem dargestellten Beispiel soll eine Flasche an einer Position 1 eine Lichtschranke 32a durchlaufen. Diese ist mit einer als Kamera ausgeführten Sensorvorrichtung 32b gekoppelt, so dass eine Aufnahme einer Flasche 35 exakt an einer Position 2 durchgeführt werden kann. Die Aufnahme wird gemäß der Beschreibung in Figur 1 von einem Erkennungsmodul (nicht dargestellt) ausgewertet. Auf Basis eines Ergebnisses dieser Auswertung wird anschließend entschieden, ob die Flasche 35 in der Produktionslinie 34 verbleibt oder an einer Position 3 ausgestoßen wird. Hierzu erhält die Anlagensteuerung 33 entsprechende Informationen einer zentralen Steuerung (ebenfalls nicht dargestellt) eines Überwachungssystems nach Figur 1, das die Sensorvorrichtungen 32 umfasst. Entsprechend setzt sich der flexible Steuerungsteil 33b der Anlagensteuerung 33 rein beispielhaft aus den folgenden Funktionsmodulen 31 zusammen:
- 31a: Funktionsmodul zur Überwachung der Lichtschranke
- 31b: Zeiterfassungsmodul zur Bestimmung der Flaschenposition nach einer definierten Zeitspanne für die Erstellung der Aufnahme und das rechtzeitige Ausstoßen der Flasche.
- 31c: Funktionsmodul zur Steuerung der Auswurfvorrichtung.

## Patentansprüche

1. Verfahren zur automatischen modularen Einbindung von Sensorvorrichtungen (16, 17, 18) in eine zentrale Steuerung (11) eines Netzwerks mit mindestens einem ersten Server, der mindestens ein erstes Kommunikationsmodul (12) und die zentrale Steuerung (11) für mindestens einen Teil des Netzwerks umfasst, mit mindestens den folgenden Schritten:
a.) Ermitteln von Sensorvorrichtungen (16), die dem mindestens einen ersten Server tatsächlich zugeordnet sind, durch das mindestens eine erste Kommunikationsmodul (12),
b.) Vergleichen der ermittelten tatsächlichen Sensorvorrichtungen (16a, 16b) mit einer in einem Erkennungsauftrag definierten Anzahl von erkennbaren Sensorvorrichtungen und Bestimmen von übereinstimmenden Sensorvorrichtungen (16a), wobei der Erkennungsauftrag eine Anweisung an das Kommunikationsmodul (12) ist, die eine von dem Kommunikationsmodul (12) auszuführende Aufgabe und die hierzu notwenigen Informationen enthält, wobei mit dem Erkennungsauftrag explizit im Voraus definiert wird, welche Sensorvorrichtungen (16) an diesem Server erkannt werden sollen,
c.) Senden von den übereinstimmenden Sensorvorrichtungen (16a) zugeordneten Daten von dem ersten Kommunikationsmodul (12) an die zentrale Steuerung (11).
d.) automatisches Abrufen von vordefinierten, in einer Bibliothek hinterlegten Steuerungsmodulen und Integrieren derselben in die zentrale Steuerung (11) auf Basis der gesendeten Daten,
wobei die vordefinierten Steuerungsmoodule jeweils den Daten der übereinstimmenden Sensorvorrichtungen (16a) zugeordnet sind, wobei das Verfahren außerdem folgenden Schritt zur Ansteuerung der eingebundenen Sensorvorrichtungen (16a) umfasst:
e.) Abrufen mindestens eines definierten, in einer Bibliothek hinterlegten und bereitgestellten Erkennungsmoduls (13) und automatisches Integrieren desselben in den mindestens einen ersten Server,
wobei das integrierte definierte Erkennungsmodul (13) zum gegenseitigen Datenaustausch kommunikationstechnisch mit dem ersten Kommunikationsmodul (12) und mit mindestens einer der dem Server zugeordneten Sensorvorrichtungen (16a) verbunden ist.

2. Verfahren nach Anspruch 1, wobei das Netzwerk des weiteren eine Anzahl von zweiten Servern umfasst, wobei jedem der zweiten Server aus der Anzahl von zweiten Servern je ein zweites Kommunikationsmodul (14) zugeordnet ist, das mit dem ersten Kommunikationsmodul (12) kommunikationstechnisch verbunden ist, wobei die Schritte a.) und b.) an Stelle des mindestens einen ersten Servers von und in Bezug auf mindestens einen zweiten Server von der Anzahl von zweiten Servern ausgeführt werden und das Verfahren ferner die weiteren folgenden Schritte umfasst:
a'.) Senden eines definierten Erkennungsauftrags von dem ersten Kommunikationsmodul (12) an das zweite Kommunikationsmodul (14) des mindestens einen zweiten Servers, wobei in dem definierten Erkennungsauftrag eine Anzahl von erkennbaren Sensorvorrichtungen definiert ist,
c'.) Senden von den übereinstimmenden Sensorvorrichtungen zugeordneten Daten von dem zweiten Kommunikationsmodul (14) des mindestens einen zweiten Servers an das erste Kommunikationsmodul (12),
wobei Schritt a'.) vor Schritt a.) und Schritt c'.) vor Schritt c.) ausgeführt wird.

3. Verfahren nach Anspruch 2, wobei das Verfahren außerdem folgende Schritte zur Ansteuerung der eingebundenen Sensorvorrichtungen (16, 17, 18) umfasst:
f.) Senden mindestens eines definierten Erkennungsmoduls von dem ersten Kommunikationsmodul (12) an das zweite Kommunikationsmodul (14) des mindestens einen zweiten Servers und
g.) automatisches Integrieren des mindestens einen definierten Erkennungsmoduls (15) In dem mindestens einen zweiten Server,
wobei das integrierte definierte Erkennungsmodul (15) zum gegenseitigen Datenaustausch kommunikationstechnisch mit dem zweiten Kommunikationsmodul (14) und mit mindestens einer der dem mindestens einen zweiten Server zugeordneten Sensorvorrichtungen (17, 18) verbunden ist.

4. Verfahren nach Anspruch 1 oder 3, wobei das Verfahren außerdem ein Weiterleiten von zwischen der mindestens einen Sensorvorrichtung (16, 17, 18) und dem Kommunikationsmodul (14) ausgetauschten Daten durch das Erkennungsmodul (13, 15) umfasst.

5. Verfahren nach einem der Ansprüche 1, 3 oder 4, wobei das Verfahren außerdem ein Verarbeiten der Daten durch das Erkennungsmodul (13, 15) umfasst.

6. Verfahren nach einem der Ansprüche 1 oder 3 bis 5, wobei das Erkennungsmodul (13, 15) automatisch anpassbar ist.

7. Verfahren nach Anspruch 6, wobei das Erkennungsmodul (13, 15) auf Basis der zugeordneten Daten angepasst wird.

8. Verfahren nach einem der Ansprüche 1 bis 7, wobei eine mit der zentralen Steuerung (11) kommunikationstechnisch verbundene Anlagensteuerung (19) automatisch anpassbar ist.

9. Verfahren nach Anspruch 8, wobei die Anlagensteuerung (19) auf Basis der zugeordneten Daten angepasst wird.

10. Vorrichtung zur Durchführung eines Verfahrens nach einem der Ansprüche 1 bis 9, wobei die Vorrichtung (10) mindestens ein Netzwerk mit mindestens einem ersten Server umfasst, der ein erstes Kommunikationsmodul (12) und die zentrale Steuerung (11) für mindestens einen Teil des Netzwerks aufweist, wobei das erste Kommunikationsmodul (12) dazu konfiguriert ist, Sensorvorrichtungen, die dem mindestens einen ersten Server tatsächlich zugeordnet sind, zu ermitteln, die ermittelten tatsächlichen Sensorvorrichtungen mit einer in einem Erkennungsauftrag definierten Anzahl von erkennbaren Sensorvorrichtungen zu vergleichen, übereinstimmende Sensorvorrichtungen zu bestimmen und Daten der übereinstimmenden Sensorvorrichtungen an die zentrale Steuerung zu senden; und die zentrale Steuerung (11) dazu konfiguriert ist, anhand der Daten entsprechend vordefinierte, in einer Bibliothek hinterlegte Steuerungsmodule in die zentrale Steuerung hinzuziehen und automatisch zu integrieren.

11. Vorrichtung nach Anspruch 10, wobei das Netzwerk des weiteren eine Anzahl von zweiten Servern umfasst, wobei jedem der zweiten Server aus der Anzahl von zweiten Servern je ein zweites Kommunikationsmodul (14) zugeordnet ist, das mit dem ersten Kommunikationsmodul (12) kommunikationstechnisch verbunden ist.

12. Computerprogramm mit Programmcodemitteln, um alle Schritte eines Verfahrens nach einem der Ansprüche 1 bis 9 durchzuführen, wenn das Computerprogramm auf einem Computer oder einer entsprechenden Recheneinheit ausgeführt wird.

13. Computerprogramm nach Anspruch 12, das auf einem computerlesbaren Datenträger gespeichert ist.

## Claims

1. A method for the automatic modular integration of sensor devices (16, 17, 18) in a central controller (11) of a network having at least one first server which comprises at least one first communication module (12) and the central controller (11) for at least a part of the network, with at least the following steps:
a.) determining the sensor devices (16) actually associated with the at least one first server by the at least one first communication module (12),
b.) comparing the determined actual sensor devices (16a, 16b) with a quantity of detectable sensor devices defined in a detecting order and determining matching sensor devices (16a), with the detecting order being an instruction to the communication module (12) containing a task to be executed by the communication module (12) and the information necessary for this purpose, and with the detecting order defining explicitly and in advance which sensor devices (16) are to be detected on this server,
c.) sending of data assigned to the matching sensor devices (16a) from the first communication module (12) to the central controller (11),
d.) automatic retrieving of predefined control modules stored in a library, and integrating them in the central controller (11) based on the transmitted data,
wherein the predefined control modules are each associated with the data of the matching sensor devices (16a), with the method also comprising the following step for triggering the integrated sensor devices (16a):
e.) retrieving of at least one defined detecting module (13) stored and provided in a library and automatic integrating of the same in the at least one first server, wherein - for the purpose of data interchange - the integrated defined detecting module (13) is connected by communication technology with the first communication module (12) and with at least one of the sensor devices (16a) assigned to the server.

2. The method of claim 1 wherein the network also comprises a quantity of second servers, with each of the second servers from the quantity of second servers being assigned a second communication module (14) which is connected by communication technology with the first communication module (12), with steps a.) and b.) being executed by and in relation to at least one second server of the quantity of second servers in place of the at least one first server, and the method moreover comprising the following further steps:
a'.) sending of a defined detecting order from the first communication module (12) to the second communication module (14) of the at least one second server, a number of detectable sensor devices being defined in the defined detecting order,
c'.) sending of data assigned to the matching sensor devices from the second communication module (14) of the at least one second server to the first communication module (12),
with step a'.) being executed before step a.) and step c'.) before step c.).

3. The method of claim 2, wherein the method also comprises the following steps for triggering the integrated sensor devices (16, 17, 18):
f.) sending of at least one defined detecting module by the first communication module (12) to the second communication module (14) of the at least one second server and
g.) automatic integration of the at least one defined detecting module (15) in the at least one second server,
wherein the integrated defined detecting module (15) is connected for data interchange by communication technology with the second communication module (14) and with at least one of the sensor devices (17, 18) assigned to the at least one second server.

4. The method of claims 1 or 3 wherein the method also comprises the forwarding by the detecting module (13, 15) of data interchanged between the at least one sensor device (16, 17, 18) and the communication module (14).

5. The method of any one of claims 1, 3 or 4 wherein the method also comprises a processing of the data by the detecting module (13, 15).

6. The method of any one of claims 1 or 3 to 5, wherein the detecting module (13, 15) is automatically adaptable.

7. The method of claim 6 wherein the detecting module (13, 15) is adapted on the basis of the assigned data.

8. The method of any one of claims 1 to 7 wherein an installation controller (19) connected by communication technology with the central controller (11) is automatically adaptable.

9. The method of claim 8 wherein the installation controller (19) is adapted on the basis of the assigned data.

10. A device for performing a method according to any one of claims 1 to 9, wherein the device (10) comprises at least one network with at least one first server which comprises a first communication module (12) and the central controller (11) for at least one part of the network, with the first communication module (12) being configured to determine sensor devices actually associated with the at least one first server, to compare the determined actual sensor devices with a quantity of detectable sensor devices defined in a detecting order, to determine matching sensor devices and to transmit data of the matching sensor devices to the central controller; and the central controller (11) is configured to add correspondingly predefined control modules that are stored in a library to the central controller and automatically integrate them therein on the basis of the data.

11. The device of claim 10 wherein the network further comprises a quantity of second servers, with each of the second servers from the quantity of second servers being assigned a second communication module (14) that is connected by communication technology with the first communication module (12).

12. A computer programme with programme code means for executing all steps of a method according to any one of claims 1 to 9 when the computer programme is run on a computer or a corresponding processing unit.

13. The computer programme of claim 12 that is stored on a computer-readable data medium.

## Revendications

1. Procédé d'intégration modulaire automatique de dispositifs de détection (16, 17, 18) dans une commande centrale (11) d'un réseau avec au moins un premier serveur, qui comprend au moins un premier module de communication (12) et la commande centrale (11) pour au moins une partie du réseau, avec au moins les étapes suivantes :
a.) détermination de dispositifs de détection (16), qui sont réellement associés à au moins un premier serveur, par le au moins un premier module de communication (12),
b.) comparaison des dispositifs de détection réels déterminés (16a, 16b) à un nombre, défini dans un ordre de reconnaissance, de dispositifs de détection reconnaissables et spécification des dispositifs de détection concordants (16a), l'ordre de reconnaissance étant une instruction destinée au module de communication (12) qui contient une tâche à effectuer par le module de communication (12) et qui contient des informations nécessaires pour cela, avec l'ordre de reconnaissance étant défini explicitement à l'avance quels dispositifs de détection (16) doivent être reconnus sur ce serveur,
c.) envoi de données associées aux dispositifs de détection concordants (16a) par le premier module de communication (12) à la commande centrale (11),
d.) appel automatique de modules de commande prédéfinis, déposés dans une bibliothèque et intégration de ceux-ci dans la commande centrale (11) sur la base des données envoyées,
les modules de commande prédéfinis étant associés chacun aux données des dispositifs de détection concordants (16a), le procédé comprenant en outre l'étape suivante pour la commande des dispositifs de détection intégrés (16a) :
e.) appel d'au moins un module de reconnaissance (13) défini, fourni et déposé dans une bibliothèque et intégration automatique de ce dernier dans le au moins un premier serveur,
le module de reconnaissance (13) défini, intégré, étant relié par une technique de communication pour l'échange mutuel de données avec le premier module de communication (12) et avec au moins un des dispositifs de détection (16a) associés au serveur.

2. Procédé selon la revendication 1, le réseau comportant en outre un certain nombre de seconds serveurs, à chacun des seconds serveurs parmi le nombre de seconds serveurs étant associé un second module de communication (14) qui est relié par une technique de communication au premier module de communication (12), les étapes a.) et b.) étant exécutées à la place du au moins premier serveur par au moins un second serveur du nombre de seconds serveurs et en référence à ce dernier et le procédé comportant en plus les autres étapes suivantes :
a'.) envoi d'un ordre de reconnaissance défini par le premier module de communication (12) au second module de communication (14) du au moins un second serveur, un certain nombre de dispositifs de détection reconnaissables étant défini dans l'ordre de reconnaissance défini,
c'.) envoi de données associées aux dispositifs de détection concordants par le second module de communication (14) du au moins un second serveur au premier module de communication (12),
l'étape a'.) étant exécutée avant l'étape a.) et l'étape c'.) avant l'étape c.).

3. Procédé selon la revendication 2, le procédé comportant en outre les étapes suivantes pour la commande des dispositifs de détection intégrés (16, 17, 18) :
f.) envoi au moins d'un module de reconnaissance défini par le premier module de communication (12) au second module de communication (14) du au moins un second serveur et
g.) intégration automatique du au moins un module de reconnaissance défini (15) dans le au moins un second serveur.
le module de reconnaissance (15) défini, intégré, étant relié par une technique de communication pour l'échange mutuel de données avec le second module de communication (14) et avec au moins un des dispositifs de détection (17, 18) associés avec le au moins un second serveur.

4. Procédé selon la revendication 1 ou 3, le procédé comportant en outre un transfert par le module de reconnaissance (13, 15) de données échangées entre le au moins un dispositif de détection (16, 17, 18) et le module de communication (14).

5. Procédé selon la revendication 1, 3 ou 4, le procédé comportant en outre un traitement des données par le module de reconnaissance (13, 15).

6. Procédé selon l'une quelconque des revendications 1 ou 3 à 5, le module de reconnaissance (13, 15) pouvant être adapté automatiquement.

7. Procédé selon la revendication 6, le module de reconnaissance (13, 15) étant adapté sur la base des données associées.

8. Procédé selon l'une quelconque des revendications 1 à 7, une commande d'installation (19) reliée par une technique de communication à la commande centrale (11) pouvant être adaptée automatiquement.

9. Procédé selon la revendication 8, la commande d'installation (19) étant adaptée sur la base des données associées.

10. Dispositif pour effectuer un procédé selon l'une quelconque des revendications 1 à 9, le dispositif (10) comportant au moins un réseau avec au moins un premier serveur qui comporte un premier module de communication (12) et la commande centrale (11) pour au moins une partie du réseau, le premier module de communication (12) étant configuré pour déterminer des dispositifs de détection, qui sont associés réellement avec le au moins un premier serveur, pour comparer les dispositifs de détection réels déterminés à un nombre, défini dans un ordre de reconnaissance, de dispositifs de détection reconnaissables, pour spécifier des dispositifs de détection concordants et pour envoyer des données des dispositifs de détection concordants à la commande centrale; et la commande centrale (11) étant configurée pour attirer des modules de commande déposés dans une bibliothèque, prédéfinis de manière correspondante à l'aide des données dans la commande centrale et pour les intégrer automatiquement,

11. Dispositif selon la revendication 10, le réseau comportant en outre un certain nombre de seconds serveurs, à chacun des seconds serveurs parmi le nombre de seconds serveurs étant associé un second module de communication (14) qui est relié au premier module de communication (12) par une technique de communication.

12. Programme d'ordinateur avec des moyens de code de programme pour effectuer toutes les étapes du procédé selon l'une quelconque des revendications précédentes 1 à 9, lorsque le programme d'ordinateur est exécuté sur un ordinateur ou sur une unité de calcul correspondante.

13. Programme d'ordinateur selon la revendication 12, lequel est enregistré sur un support de données lisible par ordinateur.
